(19) Europäisches Patentamt
European Patent Office
Office européen des brevets

(11) Publication number: 0 437 327 A2

# (12) EUROPEAN PATENT APPLICATION

(21) Application number: 91300066.7

(51) Int. Cl.$^5$: C09D 4/00

(22) Date of filing: 04.01.91

(30) Priority: 08.01.90 US 461958

(43) Date of publication of application: 17.07.91 Bulletin 91/29

(84) Designated Contracting States: DE FR GB IT

(71) Applicant: DOW CORNING CORPORATION
3091 S. Saginaw Road
Midland Michigan 48686-0994 (US)

(72) Inventor: Cottington, Levi James
21 Erie Court
Midland, Michigan (US)
Inventor: Revis, Anthony
9417 Garfield Road
Freeland, Michigan (US)

(74) Representative: Laredo, Jack Joseph et al
Elkington and Fife Beacon House 113 Kingsway
London, WC2B 6PP (GB)

## (54) Radiation curable abrasion resistant cyclic ether acrylate coating composition.

(57) The present invention relates to a novel coating composition containing amino-organofunctional silanes, multifunctional acrylates, cyclic ether acrylates and colloidal silica. This coating composition may be applied to solid substrates and cured by exposure to ultraviolet light or electron beam radiation to form a substantially clear, abrasion resistant layer.

EP 0 437 327 A2

# RADIATION CURABLE ABRASION RESISTANT CYCLIC ETHER ACRYLATE COATING COMPOSITION

This invention relates to a radiation curable protective coating composition. More specifically, it relates to a coating composition containing amino-organofunctional silanes, cyclic ether acrylates, multifunctional acrylates and colloidal silica. When applied to a substrate and radiation cured, this composition forms a protective, abrasion resistant, weather resistant, ultraviolet light resistant, transparent coating firmly held thereon. In addition, substrates coated with this composition may be tinted and/or dyed. Current markets for such coatings are well established and will expand as the abrasion resistance and weatherability of these coatings is improved.

Amino-organofunctional silanes have been incorporated into coating compositions that are used as adhesion promoters and releasing films but never before has colloidal silica been added to formulations which contain amino-organofunctional silanes and cyclic ether acrylates. U.S. Patent No. 4,603,086 and assigned to Dai Nippon Insatsu K. K. ; Shin-Etsa Kagaku Kogyo K. K., both of Japan, discloses silicone compounds made by reacting a primary amino-organofunctional silane with a multifunctional acrylic compound by Michael addition. Similarly, U.S. Patent No. 4,697,026 and assigned to Dow Corning Corporation, Midland, Michigan, discloses a silicone compound made by reacting a primary or secondary amino-organofunctional silane with a multifunctional acryl compound by Michael addition. The uniqueness of the present invention is found in that it further reacts the product formed from the Michael addition between an amino-organofunctional silane, multifunctional acrylate and cyclic ether acrylate, with colloidal silica to yield a transparent abrasion resistant coating with superior properties.

It is one object of the present invention to provide an abrasion resistant coating composition which uses amino-organofunctional silanes and cyclic ether acrylates.

Another object of the present invention is to provide a abrasion resistant coating composition in which aqueous and/or organic dispersions of colloidal silica may be used.

Still another object of this invention is to provide an improved abrasion resistant coating composition for solid substrates which is curable by either electron beam or ultraviolet light radiation.

These and other objects are accomplished herein by a radiation curable coating composition comprising:

(A) at least one multifunctional acrylate monomer ;

(B) an amino-organofunctional silane modified acrylate ; and

(C) colloidal silica, wherein (B) comprises the reaction product of

(i) an amino-organofunctional silane having the formula

$$R^2NH\text{-}R^4\text{-}Si\text{-}(OR^1)_3$$

(ii) a cyclic ether acrylate having the formula

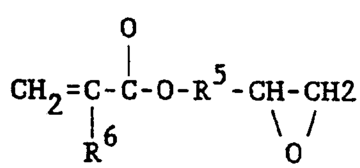

and

(iii) at least one multifunctional acrylate monomer of said component (A), wherein :

$R^1$ is a monovalent hydrocarbon radical having 1 to 6 carbon atoms ;

$R^2$ is selected from the group consisting of hydrogen, a monovalent hydrocarbon radical and $R^3\text{-NH-}(CH_2)_m$, where m is an integer from 1 to 3 ; $R^3$ is hydrogen or a monovalent hydrocarbon radical ;

$R^4$ and $R^5$ are divalent hydrocarbon radicals having 1 to 10 carbon atoms ; optionally containing one or more ether oxygen atoms within aliphatic segments thereof and optionally containing one or more functional substituents ;

$R^6$ is hydrogen or a monovalent hydrocarbon radical having 1 to 6 carbon atoms.

Component (A) of this novel composition comprises at least one acrylate monomer which contains two or more functional groups selected from the group consisting of acryloxy and methacryloxy groups. These multifunctional acrylate monomers may be used singly or in combination with other multifunctional acrylate monomers. Some preferred multifunctional acrylate monomers useable as component (A) include :

diacrylates of the formulas ;

1,6-hexanediol diacrylate,

1,4-butanediol diacrylate,

ethylene glycol diacrylate,
diethylene glycol diacrylate,
tetraethylene glycol diacrylate,
tripropylene glycol diacrylate,
neopentyl glycol diacrylate,
1,4-butanediol dimethacrylate,
poly(butanediol) diacrylate,
tetraethylene glycol dimethacrylate,
1,3-butylene glycol diacrylate,
triethylene glycol diacrylate,
triisopropylene glycol diacrylate,
polyethylene glycol diacrylate,
bisphenol A dimethacrylate,
triacrylates of the formulas ;
trimethylolpropane triacrylate,
trimethylolpropane trimethacrylate,
pentaerythritol monohydroxy triacrylate,
trimethylolpropane triethoxy triacrylate,
tetraacrylates of the formulas ;
pentaerythritol tetraacrylate,
di-trimethylolpropane tetraacrylate,
pentaacrylates of the formulas ;
dipentaerythritol (monohydroxy) pentaacrylate. These multifunctional acrylate monomers are commercially available from Aldrich Chemical Company, Inc., Milwaukee, Wisconsin.

The second component of this composition (B) comprises the reaction product of

(i) an amino-organofunctional silane having the formula

$$R^2NH\text{-}R^4\text{-}Si\text{-}(OR^1)_3$$

(ii) a cyclic ether acrylate having the formula

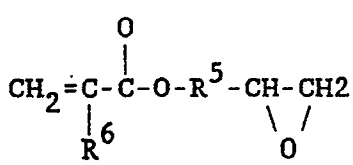

and

(iii) at least one multifunctional acrylate monomer of said component (A), wherein $R^1$ is a monovalent hydrocarbon radical having 1 to 6 carbon atoms. $R^2$ is selected from the group consisting of hydrogen, a monovalent hydrocarbon radical and $R^3\text{-NH-}(CH_2)_m$, where m is an integer from 1 to 3 ; $R^3$ is hydrogen or a monovalent hydrocarbon radical. $R^4$ and $R^5$ are divalent hydrocarbon radicals having 1 to 10 carbon atoms; optionally containing one or more ether oxygen atoms within aliphatic segments thereof and optionally containing one or more functional substituents. The exact nature of the organic portions of $R^4$ and $R^5$ are not critical to the operability of this invention. $R^6$ is hydrogen or a monovalent hydrocarbon radical having 1 to 6 carbon atoms.

The amino-organofunctional silanes used in this invention can be any of those known in the art which have primary and secondary amine functionality. These compounds can be prepared by methods well-known in the art and many are commercially available. Some preferred amino-organofunctional silanes useable as (i) of component (B) include :

N-(2-aminoethyl-3-aminopropyl)trimethoxysilane
N-(2-aminoethyl-3-aminopropyl)methyldimethoxysilane
N-(2-aminoethyl-3-aminopropyl)triethoxysilane
3-aminopropyltriethoxysilane
3-aminopropyltrimethoxysilane
anilinopropyltrimethoxysilane.

These preferred amino-organofunctional silanes are commercially available from Petrarch Systems, Inc., Bristol, PA.

Some preferred cyclic ether acrylates useable as (ii) of component (B) include :
glycidylacrylate

glycidylmethacrylate

These cyclic ether acrylates are commercially available from Aldrich Chemical Company, Inc., Milwaukee, WI.

The amino-organofunctional silane modified acrylate compounds of this invention can be prepared by intimately mixing an amino-organofunctional silane compound having at least one primary amine or secondary amine group with a cyclic ether acrylate as described in (ii) and a multifunctional acrylate monomer as described in (iii). The combination of amines and acrylates produces an acrylate functional compound through a reaction generally known as the Michael addition. For example, in the mixture containing (i), (ii) and (iii), a primary or secondary amine functionality of the amino-organofunctional silane undergoes a Michael addition to one or more of the double bonds of the acrylates. The resulting product is referred to as an amino-organofunctional silane modified acrylate.

Applicants have found that the preferred temperature conditions for this reaction exist between room temperature and 100°C. Moreover, best results are obtained when the reactants remain in contact for at least six hours at room temperature. Heating the mixture increases the rate of the reaction and as the temperature of the reaction is increased, the loss of acrylate functionality due to free radical initiated chain reactions also increases. Thus at temperatures above 100°C. considerable loss of the acrylate functionality may occur.

The third component (C) of this composition comprises silica in the form of a colloidal dispersion. Colloidal silica is a dispersion of submicron-sized silica ($SiO_2$) particles in an aqueous or other solvent medium. The colloidal silicas used in this composition are dispersions of aqueous and organic based colloidal silica. Colloidal silica is available in acid or basic form. Either form may be utilized. Some preferred examples of colloidal silica usable as component (C) include : Nalco 1034A colloidal silica (Nalco 1034A), Nalco 1129 colloidal silica (Nalco 1129), Nalco 2327 colloidal silica (Nalco 2327), Nalco 2326 colloidal silica (Nalco 2326), Nalco 1140 colloidal silica (Nalco 1140) and Nalco 84SS258 colloidal silica (Nalco 84SS258), which can be obtained from Nalco Chemical Company, Naperville, IL.

Nalco 1034A has a mean particle size of 20 nm and an $SiO_2$ content of approximately 34% by weight in water with a pH of approximately 3.1. Nalco 1129 has a mean particle size of 20nm and an $SiO_2$ content of approximately 30% by weight in a solution of 40% isopropanol and 30% water. Nalco 2327 has a mean particle size of 20nm and an $SiO_2$ content of approximately 40% by weight in water with a pH of approximately 9.3 and ammonium as the stabilizing ion. Nalco 2326 has a mean particle size of 5nm arid an $SiO_2$ content of approximately 14.5% by weight in water with a pH of approximately 9.0 and ammonium as the stabilizing ion. Nalco 1140 has a mean particle size of 15nm and an $SiO_2$ content of approximately 40% by weight in water with a pH of approximately 9.7 and sodium as the stabilizing ion. Nalco 84SS258 has a mean particle size of 20nm and an $SiO_2$ content of approximately 30% by weight in a solution of propoxyethanol.

Other additives can be added to the compositions in order to enhance the usefulness of the coatings. For example, leveling agents, ultraviolet light absorbers, hindered amine light stabilizers (HALS), oxygen inhibitors, dyes and the like, can be included herein. All of these additives and the use thereof are well known in the art and do not require extensive discussions. Therefore, only a limited number will be referred to, it being understood that any of these compounds can be used as long as they do not deleteriously effect either the radiation curing or the transparency of the coating.

A particularly desirable additive has been found to be a small amount of a leveling agent. Leveling agents can be used on the substrates to cover surface irregularities and to aid in the uniform dispersion of the coating composition. These agents are especially useful in compositions where all the solvent has been removed. For purposes of the present invention, the addition of 0.01 to 5.0 percent commercial silicone glycol leveling agents, work well to provide the coating composition with desirable flowout and wetting properties.

Also useful as additives to the present coating compositions are UV absorbers and hindered amine light stabilizers. UV absorbers and hindered amine light stabilizers act to diminish the harmful effects of UV radiation on the final cured product and thereby enhance the weatherability or resistance to cracking, yellowing and delamination of the coating. A preferred hindered amine light stabilizer is bis(1,2,2,6,6-pentamethyl-4-piperidinyl)-[3,5-bis(1,1-dimethylethyl-4-hydroxyphenyl)methyl]butylpropanedioate, available as Tinuvin (R) 144, from CIBA-GEIGY Corporation, Hawthorne, NY.

For the purpose of the present compositions, the following UV absorbers and combinations thereof in concentrations of less than 20 weight percent based on the total composition, have been shown to produce desirable results : bis(1,2,2,6,6-pentamethyl-4-piperidinyl)(3,5-bis (1,1-dimethylethyl 1-4-hydroxyphenyl)methyl)butylpropanedioate, 2-ethylhexyl-2-cyano-3,3′-diphenylacrylate, 2-hydroxyl-4-n-octoxybenzophenone, 2-(2′-hydroxy-5′-methylphenyl)benzotriazole, poly(oxy-1,2-ethanediyl),alpha-(3-(3-(2H-benzotriazol-2-yl)-5-(1,1-dimethylethyl)-4-hydroxy-1phenyl)-1-oxopropyl)-omega-hydroxy and Uvinul (R) D-50 and MS-40, sold by BASF Wyandotte Inc., Parsippany, NJ. Concentrations of UV absorbers, however, in the range of 1 to 5 percent based on the total weight of the composition are preferred.

Incorporating UV absorbers into the instant compositions will permit the curing process regardless of

whether UV or electron beam radiation is used to cure the composition. However, in the situation where UV radiation is to be used to cure the composition, the amount of UV absorbers added must be carefully controlled so as not to hinder the cure. This limitation does not exist in the case of electron beam radiation cure.

In the practice of the present invention, the radiation curable compositions can be made by combining the cyclic ether acrylates and multifunctional acrylate monomers, with a given quantity of alcohol. Suitable alcohols, for example, include any water soluble or water miscible alcohol, for example, methanol, ethanol, propanol, butanol, etc. or ether alcohols, such as ethoxyethanol, butoxyethanol, methoxypropanol, etc. For purposes of the present invention, applicants prefer to use isopropanol. The amino-organofunctional silane is added dropwise to the mixture while agitation is applied. The mixture is then left to stand for a sufficient period of time to allow the Michael Addition to take place. A small amount of an organic acid may, optionally, be added to the mixture. Suitable organic acids include, for example, acetic acid, propionic acid and benzoic acid, etc. The colloidal silica is then added while agitation is applied to the mixture. After allowing the mixture to stand for a period of time, the volatiles may optionally be removed under reduced pressure and/or the mixture may, be filtered. In the case where solvents have been removed, acrylate monomers may be added to the residue to serve as reactive diluents.

According to the coating process of the present invention, the above described compositions are coated on a substrate using conventional coating techniques modified as appropriate to the particular substrate. For example, these compositions can be applied to a variety of solid substrates by methods such as roller coating, flow coating, dip coating, spin coating, spray coating and curtain coating. These various methods of coating allow the compositions to be placed on the substrate at variable thicknesses thus allowing a wider range of use of the compositions. Coating thicknesses may vary, but for improved abrasion resistance coating thicknesses of 2-25 microns, preferably about 5 microns, are recommended.

The compositions may then be cured by either ultraviolet light or electron beam radiation. Ultraviolet light may be used to cure the compositions if one or more photoinitiators is added prior to curing. Radical-type initiators can be utilized alone, but employing a combination of radical and cationic photoinitiators results in improved abrasion resistance. The radical-type photoinitiators are used to cure the acryloxy portions of the composition whereas the cationic-type initiators cure the epoxy portions. There are no special restrictions on the photoinitiators as long as they can generate radicals by the absorption of optical energy.

Ultraviolet light sensitive photoinitiators or blends of initiators which may be used in the UV cure of the present composition include 2-hydroxy-2-methyl-1-phenyl-propan-1-one (Darocur (R) 1173), sold by EM Industries, Inc., Hawthorne, New York and 2,2-dimethoxy-2-phenyl-acetyl-phenone (Irgacure (R) 651), sold by Ciba-Geigy Corporation, Hawthorne, New York. In addition, cationic-type photoinitiators including onium salts may be used alone or in conjunction with the radical-type photoinitiators. The following cationic photoinitiators are particularly effective for initiating a cross-linking reaction upon exposure to radiation : Cyracure (R) UVI 6974 and UVI 6990, sold by Union Carbide Corporation, Danbury, CT.

It is ordinarily preferable to use approximately five percent, based on solids, of at least one photoinitiator. However, depending upon individual desired process parameters such as rate of cure and ultimate abrasion resistance, the amount of the photoinitiator or combinations of photoinitiators can range from approximately 0.5 to 10.0 percent based on the total weight of the composition.

Oxygen inhibitors, which are materials used in conjunction with photoinitiators that increase their efficiency, may also be added. An example of a preferred oxygen inhibitor is 2-ethylhexyl-para-dimethylaminobenzoate, available as Uvatone (R) 8303, from The UpJohn Company, North Haven, CT.

Alternatively, the coating composition may be electron beam radiation cured. Electron beam sources of various types such as van de Graaff-type, resonance transformer-type, linear-type, dynatron-type and high frequency-type can be used as a source of electron beam. Electron beam having energy of from 50 to 1000 KeV, preferably from 100 to 300 KeV discharged therefrom, may be irradiated in a dose of from 0.1 to 10.0 Mega Rads (MR). A particularly preferred source of electron beam is one wherein a continuous curtain-like beam is irradiated from linear filaments, such as that produced by the Electro Curtain CB-150 available from Energy Sciences Inc.

By choice of the proper formulation and application conditions including the optional use of a leveling agent, the compositions can be applied and will adhere to substantially all solid substrates. Substrates which are especially contemplated herein are transparent and nontransparent plastics and metals. More particularly, these plastics are synthetic organic polymeric substrates such as acrylic polymers like poly(methylmethacrylate) ; polyesters, such as poly(ethylene terephthalate), poly(butylene terephthalate), etc. ; polyamides ; polyimides; acrylonitrile-styrene copolymers ; styrene-acrylonitrile-butadiene copolymers ; polyvinyl chloride ; butyrates ; polyethylene ; polyolefins and the like including modifications thereof. The compositions of this invention are especially useful as transparent coatings for polycarbonates such as poly(bisphenol-A carbonate) and those polycarbonates known as Lexan (R), sold by General Electric Company, Schenectady, New York ; and as coatings for acrylics such as polymethylmethacrylates. Metal substrates on which the present compositions are also effective include bright and dull metals like aluminum and bright metallized surfaces like sputtered chromium alloy. Other solid substrates contemplated herein include wood, painted surfaces, leather, glass, ceramics, textiles and paper.

The apparatus and testing procedures used for the results shown herein are as follows :

Abrasion resistance was determined according to ASTM Method D-1044 ("Tabor Test"). The instrument used was a Teledyne Taber model 503 Taber Abraser with two 250 gram auxiliary weights (500 gram load) for each of the CS10F abrasive wheels. The acrylic and polycarbonate test panels were subjected to 100 and 500 cycles on the abraser turntable. The percent change in haze which is the criterion for determining the abrasion resistance of the coating is determined by measuring the difference in haze of the unabrased and abrased coatings. Haze is defined as the percentage of transmitted light which, in passing through the sample, deviates from the incident beam by forward scattering. In this method, only light flux that deviates more than 2.5 degrees on the average is considered to be haze. The percent haze on the coatings was determined by ASTM Method D1003. A Gardner Haze Meter was used. The haze was calculated by measuring the amount of diffused light, dividing by the amount of transmitted light and multiplying by one hundred.

Adhesion was measured by modified ASTM-D-3002 (cross-hatch adhesion). The coated test specimen is scribed with a razor, cutting through the coating to form a series of cross-hatch scribes in an area of one square inch with lines to form 1/10 inch squares. Clear cellophane tape (3M No. 600 preferred), is applied to the scribed surface, pressed down, then stripped sharply away in a direction perpendicular to the test panel surface. This first tape pull is followed by two more, using fresh tape each time. After three tape pulls, the number of squares remaining intact on the specimen are reported as a percentage of the total number of squares on the grid.

The Steel Wool Test was conducted as follows : A two inch square of 0000 steel wool was applied over the face of a 24 oz. hammer and was secured with a rubber band. Coated sample blanks were tested for scratch resistance to 20 double rubs across the center of the sample with the weighted steel wool. The hammer is held by the end of its handle such that the majority of the pressure on the steel wool comes from the hammer head. The sample is graded according to the amount of scratching produced by the steel wool and hammer. The absence of scratches on the sample is graded a 1 ; slight scratching is graded a 2 and heavy scratching is graded a 3.

The Pencil Test is meant to be a qualitative method of determining scratch resistance of a coating. A coated panel is placed on a firm horizontal surface. A pencil is held firmly against the film at a 45° angle (point away from the operator) and pushed away from the operator in a 1/4-in. (6.5-mm) stroke. The process is started with the hardest lead pencil and continued down the scale of hardness to the pencil that will not cut into or gouge the film. The hardest pencil that will not cut through the film to the substrate for a distance of at least 1/8 in. (3mm) is reported according to the following scale from Berol Corporation, Brentwood, TN. :

```
-----------softer-----      -------------harder-------------
6B, 5B, 4B, 3B, 2B, B, HB, F, H, 2H, 3H, 4H, 5H, 6H,7H,8H,9H
```

The HB grade is approximately equal to that of a #2 pencil. The F grade is slightly harder and is the one most commonly used. The H grades are harder than that and get progressively harder up through the 9H grade which is very hard. The B grade is softer than the HB grade and get progressively softer through the 6B grade which is very soft.

In order that those skilled in the art may better understand how to practice the present invention, the following examples are given by way of illustration and not by way of limitation. All parts and percentages in the examples are on a weight basis.

## Example 1

A mixture of 1.08 g of 3-aminopropyltrimethoxysilane, 0.77 g of glycidylacrylate, 25.23 g of isopropanol and 4.38 g of trimethoylpropanetriacrylate was prepared. This mixture was allowed to stand for 24 hours. Next, 0.23 g of acetic acid was added followed by 12.73 g of Nalco 1129, while the mixture underwent agitation. The mixture was then allowed to stand for 18 hours, before being filtered through a five micron filter. The filtered sample was flow coated onto a 4 x 4 polycarbonate panel and allowed to air dry for five minutes. The sample was then cured by electron beam under 4MR, 160KeV electron dose at a belt speed of 68 feet per minute under a six inch wide electron beam operated with a 4 milliamp electron current in a nitrogen atmosphere containing 200 ppm oxygen. The test results are summarized in Table I.

Example 2

A mixture of 1.08 g of 3-aminopropyltrimethoxysilane, 0.77 g of glycidylacrylate, 51.46 g of isopropanol and 4.38 g of trimethoylpropanetriacrylate was prepared. This mixture was allowed to stand for 24 hours. Next, 11.24 g of Nalco 1034A was added while the mixture underwent agitation. The mixture was then allowed to stand for 18 hours, before being filtered through a five micron filter. The filtered sample was flow coated onto a 4 x 4 polycarbonate panel and allowed to air dry for five minutes. The sample was then cured by electron beam under 4MR, 160KeV electron dose at a belt speed of 68 feet per minute under a six inch wide electron beam operated with a 4 milliamp electron current in a nitrogen atmosphere containing 200 ppm oxygen. The test results are summarized in Table I.

Example 3

A mixture of 1.08 g of 3-aminopropyltrimethoxysilane, 0.77 g of glycidylacrylate, 51.46 g of isopropanol and 4.38 g of trimethoylpropanetriacrylate was prepared. This mixture was allowed to stand for 24 hours. Next, 11.24 g of Nalco 1034A was added while the mixture underwent agitation. The mixture was then allowed to stand for 18 hours, before 0.3 g of Uvinul (R) D-50, sold by BASF Wyandotte Inc., Parsippany, NJ. and 0.2 g of Tinuvin 144 (R), from Ciba-Geigy Corporation, Hawthorne, NY., were added. This mixture was filtered through a five micron filter before being flow coated onto a 4 x 4 polycarbonate panel and allowed to air dry for five minutes. The sample was then cured by electron beam under 4MR, 160KeV electron dose at a belt speed of 68 feet per minute under a six inch wide electron beam operated with a 4 milliamp electron current in a nitrogen atmosphere containing 200 ppm oxygen. The test results are summarized in Table I.

Example 4

A mixture of 1.08 g of 3-aminopropyltrimethoxysilane, 0.77 g of glycidylacrylate, 51.46 g of isopropanol and 4.38 g of trimethoylpropanetriacrylate was prepared. This mixture was allowed to stand for 24 hours. Next, 11.24 g of Nalco 1034A was added while the mixture underwent agitation. The mixture was then allowed to stand for 18 hours, before 0.1 g of methyldiethanolamine, 0.4 g of 2-hydroxy-2-methyl-1-phenyl-propan-1-one (Darocur (R) 1173), sold by EM Industries, Inc., Hawthorne, New York and 0.1 g of Cyracure (R) UVI-6974, sold by Union Carbide Corporation, Danbury, CT., was added. This mixture was flow coated onto a 4 x 4 polycarbonate panel, which was allowed to air dry for 5 minutes. The coated polycarbonate sample was then UV cured by passing the sample through a medium pressure mercury vapor arc lamp with an average intensity of 91.56 $mW/cm^2$ at a line speed of three feet per minute. The test results are summarized in Table I.

Example 5

A mixture of 1.08 g of 3-aminopropyltrimethoxysilane, 0.77 g of glycidylacrylate, 51.46 g of isopropanol and 4.38 g of trimethoylpropanetriacrylate was prepared. This mixture was allowed to stand for 24 hours. Next, 11.24 g of Nalco 1034A was added while the mixture underwent agitation. This mixture was allowed to stand for 18 hours, before being vacuum stripped at 40°C. and 2mm Hg, on a rotoevaporator until all volatiles were removed. The sample was then flow coated onto a 4 x 4 polycarbonate panel and electron beam cured under 4MR, 160KeV electron dose at a belt speed of 68 feet per minute under a six inch wide electron beam operated with a 4 milliamp electron current in a nitrogen atmosphere containing 200 ppm oxygen. The test results are summarized in Table I.

TABLE I

| Coating Compositions | Properties of Coated Polycarbonate | | | | |
|---|---|---|---|---|---|
| | ADHESION TEST | STEEL WOOL | PENCIL TEST | ABRASION TEST $\%H_{100}$ | $\%H_{500}$ |
| Example 1 | 100% | 2 | HB | 1.5 | 7.5 |
| Example 2 | 100% | 2 | B | 2.0 | 8.2 |
| Example 3 | 100% | 1 | B | 14.8 | 24.1 |
| Example 4 | 100% | 1 | B | 0.6 | 2.6 |
| Example 5 | 100% | 1 | B | 0.4 | 3.0 |

As the results in Table I clearly indicate, abrasion resistant coating compositions comprising multifunctional acrylates, amino-organofunctional silanes, cyclic ether acrylates and colloidal silica may be easily manufactured. Furthermore, excellent results were obtained whether the coating compositions were cured by ultraviolet light or by electron beam radiation.

Many variations will suggest themselves to those skilled in this art in light of the above detailed description. All such obvious modifications are within the full intended scope of the appended claims.

**Claims**

1. A radiation curable coating composition comprising :
   (A) at least one multifunctional acrylate monomer ;
   (B) an amino-organofunctional silane modified acrylate ;
   and
   (C) colloidal silica,
   wherein (B) comprises the reaction product of
   (i) an amino-organofunctional silane having the formula
   $$R^2NH\text{-}R^4\text{-}Si\text{-}(OR^1)_3$$
   (ii) a cyclic ether acrylate having the formula

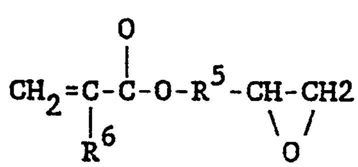

   and
   (iii) at least one multifunctional acrylate monomer of said component (A), wherein :
   $R^1$ is a monovalent hydrocarbon radical having 1 to 6 carbon atoms ;
   $R^2$ is selected from the group consisting of hydrogen, a monovalent hydrocarbon radical and $R^3\text{-}NH\text{-}(CH_2)_m$, where m is an integer from 1 to 3 ; $R^3$ is hydrogen or a monovalent hydrocarbon radical ;
   $R^4$ and $R^5$ are divalent hydrocarbon radicals having 1 to 10 carbon atoms ; optionally containing one or more ether oxygen atoms within aliphatic segments thereof and optionally containing one or more functional substituents ;
   $R^6$ is hydrogen or a monovalent hydrocarbon radical having 1 to 6 carbon atoms.

2. A composition as claimed in claim 1 which additionally contains one or more UV absorbers, hindered amine light stabilizers, photoinitiators and/or oxygen inhibitors.

**3.** The product obtained by the cure of the composition of claim 1.

**4.** A process for preparing a radiation curable coating composition containing amino-organofunctional silanes and cyclic ether acrylates comprising :

(I) combining

(A) an amino-organofunctional silane having the formula

$$R^2NH\text{-}R^4\text{-}Si\text{-}(OR^1)_3$$

(B) a cyclic ether acrylate having the formula

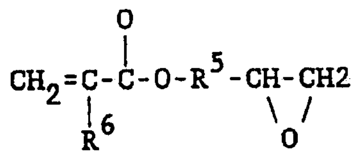

and

(C) at least one multifunctional acrylate monomer, and thereafter

(II) adding

(D) colloidal silica to the reaction product of (I), wherein :

$R^1$ is a monovalent hydrocarbon radical having 1 to 6 carbon atoms ;

$R^2$ is selected from the group consisting of hydrogen, a monovalent hydrocarbon radical and $R^3$-NH-$(CH_2)_m$, where m is an integer from 1 to 3 ; $R^3$ is hydrogen or a monovalent hydrocarbon radical ;

$R^4$ and $R^5$ are divalent hydrocarbon radicals having 1 to 10 carbon atoms ; optionally containing one or more ether oxygen atoms within aliphatic segments thereof and optionally containing one or more functional substituents ;

$R^6$ is hydrogen or a monovalent hydrocarbon radical having 1 to 6 carbon atoms.

**5.** A solid substrate having at least one surface coated with the cured composition of claim 1.